# EUROPEAN PATENT SPECIFICATION

(11) **EP 3 629 616 B1**
(45) Date of publication and mention of the grant of the patent: **03.11.2021**
(21) Application number: 18863135.2
(22) Date of filing: 28.09.2018
(51) Int. Cl.: H04W 88/08, H04L 12/24

(54) **DATA INTERACTION METHOD, DEVICE AND EQUIPMENT**
DATENINTERAKTIONSVERFAHREN, -VORRICHTUNG UND -GERÄT
PROCÉDÉ, DISPOSITIF, ET ÉQUIPEMENT FACILITANT L'INTERACTION DE DONNÉES

(30) Priority: 30.09.2017 CN 201710939926
(43) Date of publication of application: 01.04.2020
(73) Proprietor: ZTE Corporation, Shenzhen, Guangdong 518057 (CN)
(72) Inventor: ZHANG, Dunhua, Shenzhen Guangdong 518057 (CN)
(74) Representative: Canzler & Bergmeier Patentanwälte Partnerschaft mbB
(86) International application number: PCT/CN2018/108318
(87) International publication number: WO 2019/062850

(56) References cited:
- WO-A1-01/84329
- CN-A- 102 300 236
- CN-A- 106 538 037
- US-A1- 2017 127 362
- US-A1- 2017 164 215
- YEGANEH HASSAN ET AL: "Fronthaul network design for radio access network virtualization from a CAPEX/OPEX perspective", ANNALES DES TELECOMMUNICATIONS - ANNALS OF TELECOMMUNICATIONS, GET LAVOISIER, PARIS, FR, vol. 71, no. 11, 27 July 2016 (2016-07-27) , pages 665-676, XP036103418, ISSN: 0003-4347, DOI: 10.1007/S12243-016-0538-3 [retrieved on 2016-07-27]
- TIEN N NGUYEN: "Model-based version and configuration management for a web engineering lifecycle", WWW '06 PROCEEDINGS OF THE 15TH INTERNATIONAL CONFERENCE ON WORLD WIDE WEB, ACM, NEW YORK, NY, USA, 23 May 2006 (2006-05-23), pages 437-446, XP058095391, DOI: 10.1145/1135777.1135842 ISBN: 978-1-59593-323-2
- SCHOENWAELDER J ET AL: "Common YANG Data Types; rfc6991.txt", COMMON YANG DATA TYPES; RFC6991.TXT, INTERNET ENGINEERING TASK FORCE, IETF; STANDARD, INTERNET SOCIETY (ISOC) 4, RUE DES FALAISES CH- 1205 GENEVA, SWITZERLAND, 31 July 2013 (2013-07-31), pages 1-30, XP015094984, [retrieved on 2013-07-31]

## Description

### TECHNICAL FIELD

The present disclosure relates to the field of internet technologies, and in particular, to a data interaction method, a device, and an apparatus.

### BACKGROUND

Wireless networks move into the 5G era, and base station functions are split and decoupled, for example, a Centralized Unit (DU) and a Distributed Unit (CU) are split, which facilitates transition of base stations from a centralized base station system to a distributed base station system. In the disclosure, distributed base station and distributed base station system may be used interchangeably. The distributed base station system puts new requirements on a data model of the base station configuration, for example, such as the following three requirements.
1. The distributed base station system has a plurality of subsystems, each subsystem is allowed to have a plurality of instances, and the plurality of instances of a same subsystem may have model definitions of different versions.
2. The distributed base station system still appears as a complete base station network element (NE) to the outside, and therefore, for an external device, the configuration modeling of the distributed base station system is still a complete configuration model, rather than a plurality of independent subsystem models (i.e., the whole base station network element model is constituted by a plurality of subsystem models).
3. In order to achieve standardization of the system, the distributed base station system must be modeled using a standard modeling language and provide a standard data access interface.

Currently, in a case where a data model of a distributed base station system is created by using a standard modeling language such as RFC (Request for Comments) 6021, YANG (Yet Another Next Generation) modeling language, although a configuration model of a base station can be described, the following problems still exist when the standard modeling language is used to meet the above three requirements: in the standard modeling language, although a plurality of subsystems may be modeled separately and then be combined into a complete system model, data model versions used by different subsystems are required to be the same, and different subsystems cannot use different data model versions.

Patent document WO 01/84329 A1 discloses a network management system which stores a dynamically updated model of network elements. Autonomous agents model the network elements. They communicate with each other to provide network control by modeling the physical and logical operation of the network.

Patent document US 2017/164215 A1 discloses a cloud RAN comprising BBU pools and a RRH pool connected to the BBU pools. A logical model maps to the physical resources to allow virtualization for network slicing. Resource models may also be created on the RRHs.

### SUMMARY

An embodiment of the disclosure provides a data interaction method, and the method includes: creating a data model for each subsystem in a distributed base station, wherein the data model of each subsystem is used for representing a data processing mode of the subsystem, and data models of all subsystems of the distributed base station include at least two data models with a specified relationship, the specified relationship being that type information of the data models is the same but version information of the data models is different; creating a data model of a network element agent module according to the data models of all of the subsystems of the distributed base station, wherein the data model of the network element agent module is used for representing a data interaction mode between the network element agent module and each subsystem of the distributed base station; and implementing data interaction with the subsystems through the network element agent module according to the data model of the network element agent module, wherein the network element agent module is a device for implementing data interaction between the distributed base station and an external device.

An embodiment of the present disclosure further provides a data interaction device, and the device includes a first creation module, a second creation module and a control module, wherein the first creation module is configured to create a data model for each subsystem in a distributed base station, wherein the data model of each subsystem is used for representing a data processing mode of the subsystem, and data models of all subsystems of the distributed base station include at least two data models with a specified relationship, the specified relationship being that type information of the data models is the same but version information of the data models is different; the second creation module is configured to create a data model of a network element agent module according to the data models of all of the subsystems of the distributed base station, wherein the data model of the network element agent module is used for representing a data interaction mode between the network element agent module and each subsystem of the distributed base station; and the control module is configured to implement data interaction with the subsystems through the network element agent module according to the data model of the network element agent module; wherein the network element agent module is a device for implementing data interaction between the distributed base station and an external device.

An embodiment of the present disclosure further provides a data interaction apparatus, and the apparatus includes: a memory and a processor, wherein the memory is configured to store a data interaction program; and the processor is configured to execute the data interaction program stored in the memory to implement the steps of the data interaction method described in the embodiments herein.

An embodiment of the present disclosure further provides a computer-readable storage medium having a computer program stored therein, wherein the computer program is capable of being executed by a processor to perform the steps of the data interaction method described in the embodiments herein.

### BRIEF DESCRIPTION OF THE DRAWINGS

FIG. 1 is a schematic structural diagram of a distributed base station system according to an embodiment of the present disclosure;
FIG. 2 is a schematic flowchart of a data interaction method according to an embodiment of the present disclosure;
FIG. 3 is a schematic structural diagram of a data model of a subsystem according to an embodiment of the present disclosure;
FIG. 4 is a schematic structural diagram of a data model of a network element agent module according to an embodiment of the present disclosure;
FIG. 5 is a schematic structural diagram of a data model set according to an embodiment of the present disclosure;
FIG. 6 is another flowchart of a data interaction method according to an embodiment of the present disclosure; and
FIG. 7 is a schematic structural diagram of a data interaction device according to an embodiment of the present disclosure.

### DETAILED DESCRIPTION

Technical solutions in embodiments of the present disclosure will be clearly and completely described below in conjunction with the drawings in the embodiments of the present disclosure.

In an embodiment of the present disclosure, a distributed base station system may include: a network element agent module configured to realize data interaction between the distributed base station system and an external device.

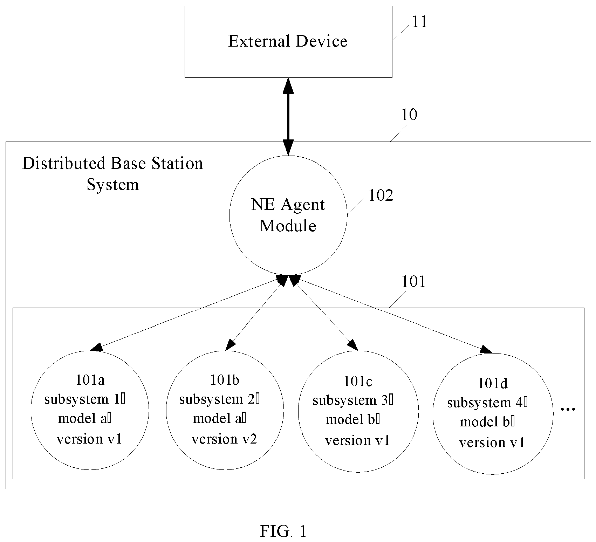

FIG. 1 is a schematic structural diagram of a distributed base station system according to an embodiment of the present disclosure. As shown in FIG. 1, the distributed base station system 10 includes: a network element agent module 102 and a plurality of subsystems 101, the network element agent module 102 is connected to each subsystem, and an external device 11 implements data interaction with each subsystem in the distributed base station 10 through the network element agent module 102. The distributed base station system 10 appears as one whole with respect to the external device 11.

The plurality of subsystems 101 includes: 101a subsystem 1, its corresponding data model is model a version v1; 101b subsystem 2, its corresponding data model is model a version v2; 101c subsystem 3, its corresponding data model is model b version v1; and 101d subsystem 4, its corresponding data model is model b version v1. Here, each subsystem has its own corresponding data model, and the data models may be different.

The method for creating a data model and the data interaction method provided by the embodiments of the present disclosure can be applied to a 5G communication system.

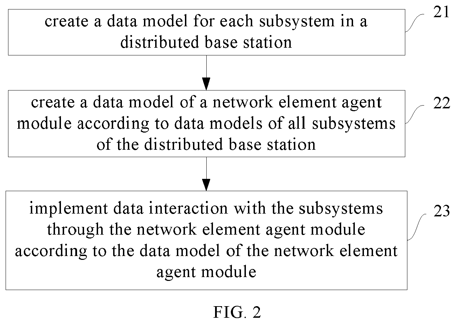

FIG. 2 is a schematic flowchart of a data interaction method according to an embodiment of the present disclosure. As shown in FIG. 2, the method includes steps 21 to 23.

At step 21, a data model is created for each subsystem in the distributed base station.

In the embodiment of the present disclosure, the data model of each subsystem is used to represent a data processing mode of the subsystem, and the data models of all the subsystems of the distributed base station include at least two data models with a specified relationship, and the specified relationship refers to that type information of the data models is the same but version information of the data models is different.

As an example, data interaction between the external device and the distributed base station system is implemented through the Network Configuration (Netconf) protocol. Data modeling languages for the Netconf protocol may include: XSD (XML Schema Definition) language, NCX (Network Configuration Extensions) language, YANG language, etc., and a standard modeling language may be used to create a data model.

As an example, the data model for each subsystem includes: a subsystem identity ID, type information of the data model of the subsystem, and version information of the data model of the subsystem. Here, the type information of the data model of the subsystem is the type information of the subsystem. In practical applications, types of subsystems may include: low-frequency subsystem, highfrequency subsystem, centralized subsystem, distributed subsystem, and the like, and a data model of a corresponding type may be created for a subsystem according to the type information of the subsystem. In some cases, subsystems can only use the data model of a same version, whereas in the present disclosure, data models having same type information but different version information may be created for subsystems.

The data model of the subsystem has a tree structure, and at least includes: a root node and an attribute child node connected to the root node, the root node includes: identification information of the distributed base station, and the identification information may be ID of the distributed base station, and the attribute child node includes: a subsystem ID, type information of the data model of the subsystem, and version information of the data model of the subsystem.

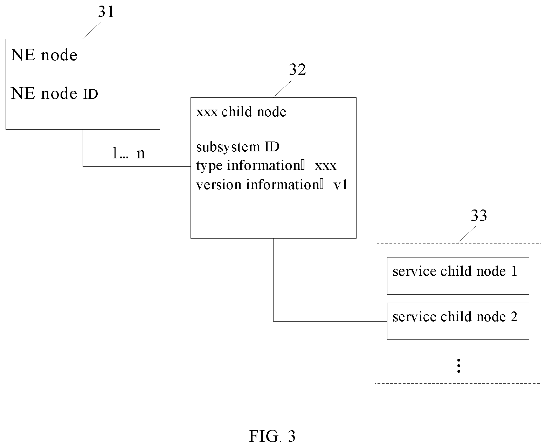

FIG. 3 is a schematic structural diagram of a data model of a subsystem according to an embodiment of the present disclosure. As shown in FIG. 3, a data model created for the subsystem using a standard modeling language includes: a root node 31, an attribute child node 32 and a plurality of service child nodes 33. The attribute child node 32 is a child node of the root node 31, the plurality of service child nodes 33 are child nodes of the attribute child node 32, that is, each service child node is a leaf node in the tree structure of the data model of the subsystem, there is only one attribute child node in the data model of the subsystem, but the attribute child node may have n different types, where n is a positive integer.

As shown in FIG. 3, the root node 31 may include: a root node name (i.e., network element node) and a network element node ID. The attribute child node 32 may include: an attribute child node name (i.e., xxx child node), subsystem ID, type information (i.e., xxx), and version information (i.e., vl). The attribute child node name may contain type information. The plurality of service child nodes 33 include: a service child node 1, a service child node 2, etc., and each service child node includes specific service information executed by the subsystem. In the embodiments of the present disclosure, the network element node refers to a distributed base station system.

At step 22, a data model of the network element agent module is created based on the data models of all the subsystems of the distributed base station.

In an embodiment of the present disclosure, the data model of the network element agent module is used to represent a data interaction mode between the network element agent module and each subsystem of the distributed base station, and the external device implements data interaction with each subsystem according to the data model of the network element agent module.

As an example, in a case where the data model of the subsystem includes the subsystem identity ID, the type information of the data model of the subsystem, and the version information of the data model of the subsystem, this step may include steps of: acquiring the data models of all the subsystems; and creating the data model of the network element agent module by using the subsystem IDs and the type information in the acquired data models of all the subsystems.

The data model of the network element agent module has a tree structure, and the data model of the network element agent module includes: a root node and a plurality of attribute child nodes connected with the root node, each attribute child node corresponding to one of the subsystems. The root node includes: identification information of the distributed base station system, and the attribute child node includes: subsystem ID and type information of the data model of the subsystem.

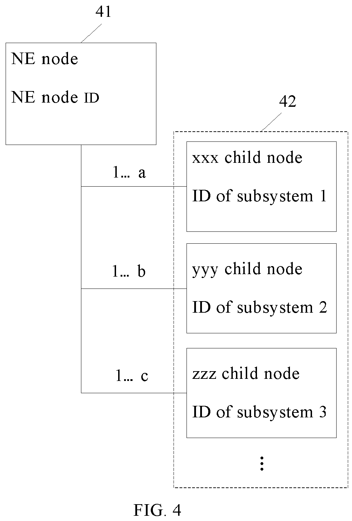

FIG. 4 is a schematic structural diagram of a data model of a network element agent module according to an embodiment of the present disclosure. As shown in FIG. 4, a data model created for the network element agent module using a standard modeling language includes: a root node 41 and a plurality of attribute child nodes 42, the plurality of attribute child nodes 42 include: a xxx child node corresponding to the subsystem 1, a yyy child node corresponding to the subsystem 2, a zzz child node corresponding to the subsystem 1, and the like. Here, xxx, yyy, and zzz represent the type information of the subsystem 1, the subsystem 2, and the subsystem 3, respectively, and also represent type information of the data model of each subsystem.

Here, each attribute child node is a child node of the root node 41, and is also a leaf node in the tree structure, and one subsystem in the distributed base station system corresponds to one of the plurality of attribute child nodes. Because different types of data models may be created for one subsystem, one subsystem in the data model of the network element agent module may correspond to multiple types of attribute child nodes, but subsystem IDs in all the attribute child nodes corresponding to one subsystem are the same. The subsystem 1 in the figure may have a different types of attribute child nodes, the subsystem 2 may have b different types of attribute child nodes, and the subsystem 3 may have c different types attribute child nodes, where a, b and c are all positive integers.

As shown in FIG. 4, the root node 41 includes: a root node name (i.e., "network element node") and a network element node ID; each of the plurality of attribute child nodes 42 includes: an attribute child node name (i.e., "xxx child node"), and a subsystem ID; and the attribute child node name may correspond to the type of the subsystem.

At step 23, data interaction with the plurality of subsystems is implemented through the network element agent module according to the data model of the network element agent module.

This step further includes: acquiring a data model set. Here, the data model set may be acquired by reading, by the network element agent module, the data model corresponding to each subsystem, the data models of all the subsystems forming the data model set, and sending the data model set to the external device.

As an example, data interaction may include: distributing data and reporting data.

The step of distributing data in this step may be implemented by the following steps: generating data to be distributed according to the data model set; in a case where the data to be distributed includes a subsystem ID, sending the data to be distributed to the network element agent module, and parsing the data to be distributed by the network element agent module according to the data model of the network element agent module to obtain at least one piece of parsed data; distributing each piece of parsed data to the corresponding subsystem according to the subsystem ID contained in each piece of parsed data; and in a case where the data to be distributed does not include the subsystem ID, sending the data to be distributed to the network element agent module, and distributing, by the network element agent module, the data to be distributed to all the subsystems whose subsystem IDs are included in the data model of the network element agent module.

The step of receiving reported data in this step may be implemented by the following steps: receiving pass-through data of the network element agent module, the pass-through data including data reported by at least one subsystem of the distributed base station.

In a case where the pass-through data contains modification information of the data model of the subsystem, the data model set is updated according to the received pass-through data.

Those skilled in the art should understand that pass-through refers to transparent transmission, and it should be noted that next time data is distributed to the distributed base station system, the data to be distributed is generated according to the latest updated data model set.

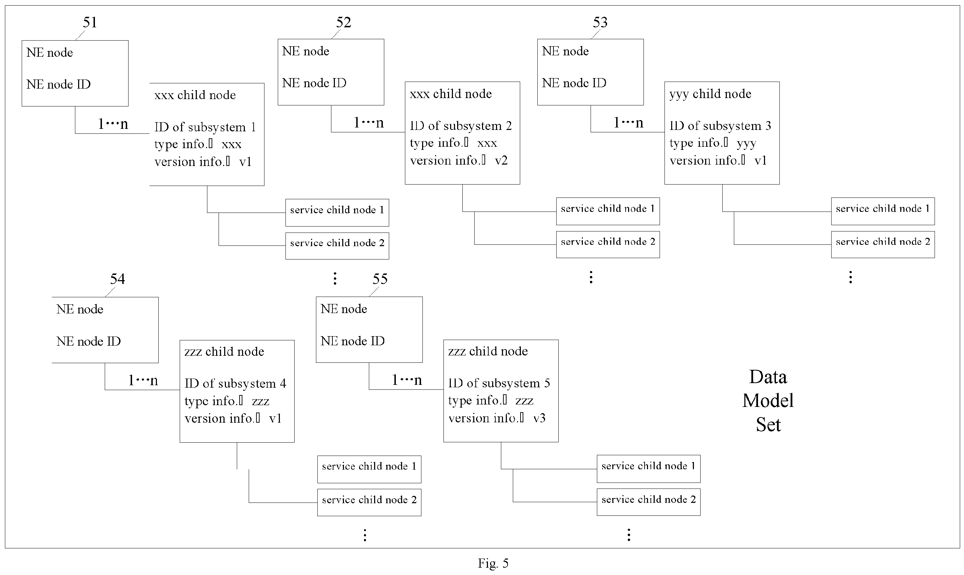

FIG. 5 is a schematic structural diagram of a data model set according to an embodiment of the present disclosure. As shown in FIG. 5, in a case where the distributed base station system includes five subsystems, the data model set includes data models of the five subsystems, namely, a data model 51 of the subsystem 1, a data model 52 of the subsystem 2, a data model 53 of the subsystem 3, a data model 54 of the subsystem 4, and a data model 55 of the subsystem 5, the data model of each subsystem having a structure as shown in FIG. 3. The network element agent module forms a data model set by using the data model of each subsystem acquired from each subsystem, and then sends the data model set to the external device, so that the external device generates communication primitives according to the data model of each subsystem, and realizes data interaction with each subsystem.

In the embodiments of the present disclosure, although the data model of the network element agent module only includes the type information of the data models of the subsystems, the data model set includes all information of the data model of each subsystem, and the external device implements data interaction with all subsystems in the distributed base station system according to all information of the subsystems included in the data model set.

According to the embodiments of the present disclosure, a data model may be created for each subsystem in the distributed base station, the data model of each subsystem being configured to represent a data processing mode of the subsystem; at least two data models with a specified relationship exist in the data models of all the subsystems of the distributed base station, and the specified relationship is that type information of the data models is the same but version information of the data models is different; a data model of a network element agent module may be created according to the data models of all subsystems of the distributed base station; the data model of the network element agent module being configured to represent a data interaction mode between the network element agent module and each subsystem of the distributed base station; and data interaction with the subsystems is implemented through the network element agent module according to the data model of the network element agent module, the network element agent module being a device that implements data interaction between the distributed base station system and an external device.

According to the embodiments, data models with the same type information but different version information can be created for subsystems, and data interaction between an external device and each subsystem in the distributed base station system can be realized through the network element agent module according to the data interaction mode contained in the data model of the network element agent module. Therefore, the data models with the same type information but different version information may be configured for different subsystems in the distributed base station system, and configuration of the data models of the subsystems in the distributed base station system has improved flexibility.

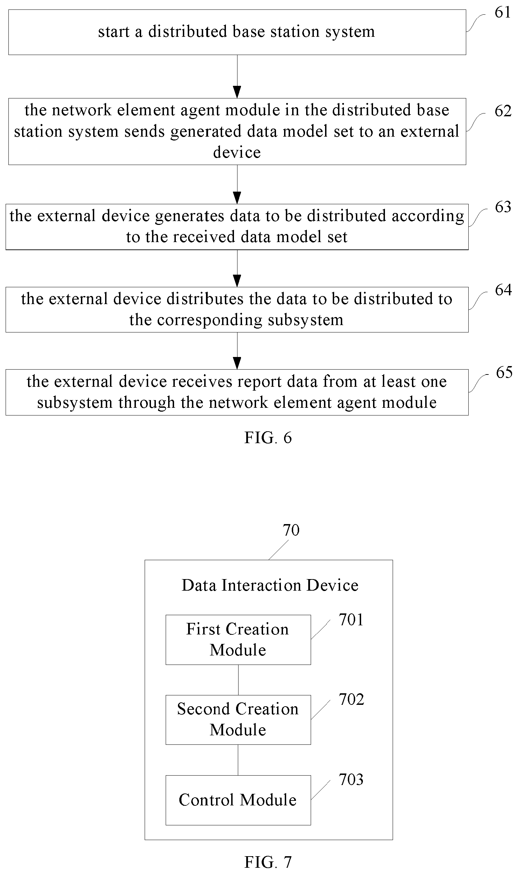

FIG. 6 is another schematic flowchart of a data interaction method according to an embodiment of the present disclosure. As shown in FIG. 6, the method includes steps 61 to 65.

At step 61, a distributed base station system is started.

As an example, starting the distributed base station system may include the following steps 611 to 613.

At step 611, each subsystem loads a respective corresponding data model.

In an embodiment, before the distributed base station system is started, each subsystem is internally configured with a respective data model, and when the system is started, each subsystem loads the respective corresponding data model to form a model as shown in FIG. 3, so as to implement different functions of the subsystem.

At step 612, the network element agent module loads the corresponding data model.

In an embodiment, before the distributed base station system is started, a data model of the network element agent module is created according to the data model configured for each subsystem, and the network element agent module loads the data model stored in itself when the system is started, so as to form a model instance as shown in FIG. 4, so as to execute a data interaction task with an external device.

At step 613, the network element agent module reads the data model of each subsystem to generate a data model set.

In an embodiment, the network element agent module reads the data model of each subsystem to form a data model set as shown in FIG. 5, and the external device generates standard communication primitives according to the data model set so as to conform to an existing communication protocol standard.

At step 62, the network element agent module in the distributed base station system sends the generated data model set to the external device.

At step 63, the external device generates data to be distributed according to the received data model set.

At step 64, the external device distributes the data to be distributed to a corresponding subsystem.

In an embodiment, the step of distributing data may include steps 641 to 645.

At step 641, the external device sends the data to be distributed to the network element agent module.

At step 642, after receiving the data to be distributed, the network element agent module determines whether the data to be distributed includes a subsystem ID, if so, step 643 is performed, and if not, step 645 is performed.

In an embodiment, in a case where the data to be distributed contains a subsystem ID, the network element agent module executes the operation of distributing data according to the contained subsystem ID; and in a case where the data to be distributed does not contain a subsystem ID, the network element agent module sends the data to be distributed to all the subsystems.

At step 643, the network element agent module parses the data to be distributed, and splits the data to be distributed into a plurality of groups of data.

At step 644, each group of data is distributed to a corresponding subsystem according to the subsystem ID contained in each group of data.

As an example, when the distributed data is a query request, the network element agent module determines whether the data to be distributed contains a subsystem ID, if so, query object is a part of the subsystems, and if not, the query object is all of the subsystems.

When the query object is a part of the subsystems, the data to be distributed includes a query request and a subsystem ID of the subsystem(s) to be queried, and the network element agent module parses the data to be distributed and sends the split data to the corresponding subsystem according to the subsystem ID; the subsystem responds to the query request and returns a query result to the network element agent module, and the network element agent module sends the query result to the external device.

When the query object is all of the subsystems, the data to be distributed may not contain a subsystem ID, and the network element agent module sends the query request to every subsystem of the distributed base station system and sends the received query result to the external device.

As an example, when the distributed data is a control command, the distributed data contains at least one subsystem ID. Similarly, the network element agent module sends the control command to the corresponding subsystem according to the subsystem ID, and the subsystem executes corresponding operation according to the received control command and sends response information to the external device.

It should be noted that, since the distributed base station system is presented as a whole system to the outside, when the external device distributes data, the data to be distributed to a plurality of subsystems needs to be bundled into one transaction, and then the transaction is sent to the network element agent module. Upon receipt of the transaction, the network element agent module firstly splits the transaction and then sends the split transactions to the corresponding subsystems.

At step 645, the data to be distributed is sent to each subsystem.

At step 65, the external device receives report data from at least one subsystem through the network element agent module.

As an example, when the report data is a query result corresponding to the query request, a process of reporting includes steps 651 to 653.

At step 651, at least one subsystem generates corresponding report data according to the received query request.

At step 652, the subsystem sends the generated report data to the network element agent module.

At step 653, the network element agent module transparently transmits the received report data to the external device.

When the data model of a subsystem changes, the subsystem reports the changed data model of the subsystem, and a process of reporting includes the following steps 654 to 656.

At step 654, the subsystem sends the changed data model to the network element agent module.

At step 655, the network element agent module transparently transmits the received data to the external device.

At step 656, the external device modifies the data model of the corresponding subsystem in the data model set according to the received report data.

It should be noted that, step 63 and step 64 belong to a process of distributing data, step 65 belongs to a process of reporting data, and the sequence of reporting data and distributing data is not limited by the embodiments of the present disclosure.

In an embodiment of the present disclosure, a data model of a subsystem obtained by modeling the subsystem using a YANG modeling language is taken as an example, and the data model has the following characteristics.
(1) The data model of each subsystem takes a unified Management Element (ME) node as a root node, where ME is a distributed base station system in the embodiments of the present disclosure. The identification information of the ME root node is MEID, when the MEIDs of a plurality of subsystems are the same, the plurality of subsystems belong to a same distributed base station system, and the ME node has only one instance. Definition of the ME root node may include:
   parent node: none, type: single instance, and attribute: MEID.
(2) The xxx child node is directly below the ME root node, xxx represents the type of the subsystem, and one subsystem has only one xxx child node. The attribute information in the xxx child node includes: FunctionType (type information of the data model, i.e., xxx); Function Version (version information of the data model); and FunctionId (subsystem ID), and the xxx child node has various instances. Definition of the attribute child node may include: parent node:
   MEID, type: various instances, and attributes: subsystem ID, type information and version information.
(3) All service child nodes in the subsystem are directly below the xxx child node, i.e., all of the service child nodes are child nodes of the xxx child node in the tree structure, and the service child nodes have various instances. Definition of the service child node may include: parent node: subsystem ID, type: various instances, and attribute: service data.

It should be noted that the above modeling rule can be described using the standard YANG modeling language, each type of subsystems is allowed to have multiple different model versions, and different version information is distinguished by FunctionVersion.

The data model of the network element agent module may have the following characteristics.
(1) The data model of the network element agent module takes a unified ME node as a root node, the identification information of the ME root node is MEID, and when the MEIDs of a plurality of subsystems are the same, the plurality of subsystems belong to a same distributed base station system. Definition of the ME root node includes: parent node: none, type: single instance, and attribute: MEID.
(2) A xxx child node is directly below the ME root node, xxx representing the type of the subsystem, and one network element agent module may include a plurality of xxx child nodes that represent data models of all types of network element agent modules included in the distributed base station system. The attribute information in the xxx child node includes: FunctionId (subsystem ID) configured to realize data interaction between the external device and the subsystem in the distributed base station system. Definition of the attribute child node may include: parent node: MEID; xxx child node 1: type: various instances, and attribute: ID of subsystem 1; xxx child node 2: type: various instances, and attribute: ID of subsystem 2; xxx child node 3: type: various instances, and attribute: ID of subsystem 3.

In an embodiment of the present disclosure, in the Netconf communication protocol corresponding to the YANG modeling language, configuration data access interface between an external management device and a managed device is defined, but this protocol only supports the case where the managed device is a simple node, and does not support the case where the managed device is multiple nodes (i.e., the managed device is composed of a plurality of subsystems). In the embodiments of the disclosure, a communication method between multiple nodes and a management device is provided, that is, communication between an external device and each subsystem in a distributed base station system is realized through a network element agent module.

To further illustrate the purpose of the present disclosure, based on the above embodiments of the present disclosure, description is further given by taking a case where the data model of the subsystem and the data model of the network element agent module are created using the YANG modeling language and the Netconf communication protocol is used to implement data interaction between the external device and the distributed base station system.

Netconf is a standard protocol for data interaction between a managed device and a management device, and specifies a lot of operation primitives for data interaction. Some key primitives for data interaction defined in accordance with the Netconf communication protocol are as follows: a) external device: user; b) network element agent module: NeAgent; c) subsystem 1: nf1; d) subsystem x: nfx. In addition, the primitives that may be used in respective processes may further include:
1. edit-config (configuring data to be distributed): one edit-config primitive is taken as one transaction, and when performing data interaction, the execution result of the transaction is: all successful or all rollback. An execution flow is as follows:
   (1) user -> NeAgent: edit-config (nfdata)
   (2) parsing nfdata, and decomposing nfdata into nf1 data to nfxdata
   (3) NeAgent -> nf1: Lock ()
   (4) NeAgent -> nfx: Lock ()
   (5) NeAgent -> nf1: edit-config (nfldata)
   (6) NeAgent -> nf2: edit-config (nf2data)
   (7) If (nf1 or nf2 failure): rollback ()
   (8) NeAgent -> nf1: Commit ()
   (9) NeAgent -> nf2: Commit ()
   (10) NeAgent -> nf1: Unlock ()
   (11) NeAgent -> nf2: Unlock ()
   (12) Agent -> user: edit-config reply ()
2. Notification (configuring report data): in definition of the Remote Procedure Call Protocol (RPC), the first parameter is specified to be an ID of a subsystem, and data reported by different subsystems are distinguished according to the first parameter in the data.
3. Lock, unlock (Lock/unlock network element data): in the embodiments of the present disclosure, a subsystem ID parameter may be added to lock a certain data model. For example, Lock (subsystem ID), Unlock (subsystem ID).
4. Delete-config, which means deleting a set of data model(s).
5. Close-session, kill-session, which mean that one Netconf session is ended.

In order to further illustrate the purpose of the present disclosure, further description is given by way of illustration on the basis of the above embodiments of the present disclosure.

In an embodiment of the disclosure, the data model of a subsystem may be modified independently without affecting normal operations of other subsystems in the distributed base station system.

For example, the data model b of the subsystem 4 in FIG. 1 may be upgraded from version v1 to version v3, attribute A is added to version v3, and meanwhile the data model of the subsystem 4 is changed accordingly.

In this case, the data model of the network element agent module remains unchanged. Since the data model of the network element agent module only includes the ID of the subsystem 4 and the type information of the data model of the subsystem 4, the data model of the network element agent module remains unchanged when the version information of the data model of the subsystem 4 is changed.

In this case, the data models of the other subsystems remain unchanged, and particularly, the neighboring subsystem 3 whose data model is still model b version v1 is not affected by the subsystem 4.

In this case, the model data set is changed, and version v3 of model b is added.

When performing data interaction between the external device and the subsystem 4, the data interaction with the subsystem 4 can be implemented according to the changed data model of the subsystem 4.

A process of modifying the data model of the subsystem 4 is as follows: 1. nfx. upgrade (model b, v1 -> v3); 2. nfx -> neAgent. virtualModelContainer. add (v3); 3. user -> neAgent. operation (nfx, v3data).

In the embodiments of the present disclosure, all subsystems in the distributed base station system are independent of each other and do not affect each other, and each subsystem can be controlled, for example: when the data model of a certain subsystem is upgraded, normal operation of the whole system is not influenced, and subsystem configuration in the distributed base station system has improved flexibility.

Embodiments of the present disclosure further provide a data interaction device. FIG. 7 is a schematic structural diagram of a data interaction device according to an embodiment of the present disclosure.

The data interaction device 70 includes: a first creation module 701, a second creation module 702, and a control module 703.

The first creation module 701 is configured to create a data model for each subsystem in a distributed base station. The data model of each subsystem is used to represent a data processing mode of the subsystem, the data models of all the subsystems of the distributed base station include at least two data models having a specified relationship, and the specified relationship is that type information of the data models is the same but version information of the data models is different.

The second creation module 702 is configured to create a data model of the network element agent module according to the data models of all subsystems of the distributed base station. The data model of the network element agent module is used to represent a data interaction mode between the network element agent module and each subsystem of the distributed base station.

The control module 703 is configured to implement data interaction with the plurality of subsystems through the network element agent module according to the data model of the network element agent module.

The network element agent module is a device for realizing data interaction between the distributed base station and an external device.

In an embodiment, the data model for each subsystem may include: a subsystem identity ID, type information of the data model of the subsystem, and version information of the data model of the subsystem.

In an embodiment, the data model of the network element agent module may include: IDs of all subsystems of the distributed base station and type information of the data models of all subsystems of the distributed base station.

In an embodiment, the control module 703 is further configured to implement data interaction with the plurality of subsystems through the network element agent module according to the data model of the network element agent module by the following operations of: acquiring a data model set, wherein when distributing data, data to be distributed is generated according to the data model set, and the data model set includes the data models of all subsystems of the distributed base station; in a case where the data to be distributed contains a subsystem ID, sending the data to be distributed to the network element agent module, so that the network element agent module distribute data according to the data model of the network element agent module; in a case where the data to be distributed does not contain a subsystem ID, sending the data to be distributed to the network element agent module, so that the network element agent module distributes the data to be distributed to all subsystems whose subsystem IDs are contained in the data model of the network element agent module; wherein the network element agent module is set to distribute data according to the data model thereof by the following operations of: parsing, by the network element agent module, the data to be distributed according to the data model of the network element agent module to obtain at least one piece of parsed data; and distributing each piece of parsed data to the corresponding subsystem according to the subsystem ID contained in each piece of parsed data.

In an embodiment, the control module 703 is further configured to implement data interaction with the plurality of subsystems through the network element agent module according to the data model of the network element agent module by the following operations of: receiving pass-through data of the network element agent module, the pass-through data including data reported by at least one subsystem of the distributed base station.

In an embodiment, the data model of each subsystem may have a tree structure, and the data model of each subsystem at least includes: a root node and an attribute child node that links to the root node. The root node includes: identification information of the distributed base station, and the attribute child node includes: a subsystem ID, type information of the data model of the subsystem, and version information of the data model of the subsystem.

In an embodiment, the data model of the network element agent module may have a tree structure, and the data model of the network element agent module includes: a root node and a plurality of attribute child nodes that link to the root node, each attribute child node corresponding to one subsystem. The root node includes: identification information of the distributed base station, and the attribute child node includes: a subsystem ID and type information of the data model of the subsystem.

In practical applications, the first creation module 701, the second creation module 702 and the control module 703 may be implemented by a Central Processing Unit (CPU), a Micro Processor Unit (MPU), a Digital Signal Processor (DSP), a Field Programmable Gate Array (FPGA), or the like, which is arranged in an external device.

Embodiments of the present disclosure further provide a data interaction apparatus including: a memory and a processor, wherein the memory is configured to store a data interaction program, and the processor is configured to execute the data interaction program stored in the memory so as to implement the steps of the data interaction method according to the embodiments disclosed herein.

Embodiments of the present disclosure further provide a computer-readable storage medium, which can be executed by a processor to implement the steps of the data interaction method according to the embodiments disclosed herein.

In practical applications, the processor may be at least one of an Application Specific Integrated Circuit (ASIC), a Digital Signal Processing Device (DSPD), a Programmable Logic Device (PLD), an FPGA, a DSP, a CPU, a controller, a microcontroller, and a microprocessor. It could be understood that for different apparatuses, the electronic device for implementing the function of the above-described processor may be other device, which is not particularly limited by the embodiments of the present disclosure.

The above-described memory or computer-readable storage medium may be: a volatile memory such as Random-Access Memory (RAM); a non-volatile memory such as a Read-Only Memory (ROM), a flash memory, a Hard Disk Drive (HDD), or a Solid-State Drive (SSD); or a combination of the foregoing types of memories. The memory or the computer-readable storage medium may provide instructions and data to the processor.

It should be understood by those skilled in the art that the embodiments of the present disclosure may be provided as a method, a system, or a computer program product. Accordingly, the present disclosure may take the form of a hardware embodiment, a software embodiment, or an embodiment combining software and hardware aspects. Additionally, the present disclosure may take the form of a computer program product implemented on one or more computer available storage media (including, but not limited to, a disk storage, an optical storage, and the like) containing computer-usable program codes.

The present disclosure is described with reference to flowcharts and/or block diagrams of methods, devices (systems), and computer program products according to embodiments of the present disclosure. It should be understood that each flow and/or block of the flowcharts and/or block diagrams, and a combinations of a flow and/or a block in the flowcharts and/or block diagrams, can be implemented by computer program instructions. These computer program instructions may be provided to a processor of a general purpose computer, a special purpose computer, an embedded processor or other programmable data processing device to produce a machine, such that the instructions, which execute via the processor of the computer or other programmable data processing device, create means for implementing the functions specified in one or more flows in the flowcharts and/or one or more blocks in the block diagrams.

These computer program instructions may also be stored in a computer-readable memory that can direct a computer or other programmable data processing device to function in a particular manner, such that the instructions stored in the computer-readable memory produce an article of manufacture including instruction means that implement the function specified in one or more flows in the flowcharts or specified in one or more blocks in the block diagrams.

These computer program instructions may also be loaded to a computer or other programmable data processing devices, to perform a series of operations and steps on the computer or other programmable devices to generate processing realized by the computer. In this case, the instructions executed on the computer or other programmable devices provide steps of implementing functions specified in one or more flows in the flowcharts and/or one or more blocks in the block diagrams.

The above embodiments are merely exemplary embodiments of the present disclosure, and are not intended to limit the protection scope of the present disclosure.

## Claims

1. A data interaction method, comprising:
creating (21) a data model for each subsystem in a distributed base station, wherein the data model of each subsystem is used for representing a data processing mode of the subsystem, and data models of all subsystems of the distributed base station include at least two data models with a specified relationship, the specified relationship being that type information of the data models is the same but version information of the data models is different;
creating (22) a data model of a network element agent module according to the data models of all of the subsystems of the distributed base station, wherein the data model of the network element agent module is used for representing a data interaction mode between the network element agent module and each subsystem of the distributed base station; and
implementing (23) data interaction with the subsystems through the network element agent module according to the data model of the network element agent module,
wherein the network element agent module is a device for implementing data interaction between the distributed base station and an external device.

2. The method of claim 1, wherein the data model (32) of each subsystem comprises: a subsystem identity ID, type information of the data model of the subsystem, and version information of the data model of the subsystem.

3. The method of claim 2, wherein the data model of the network element agent module comprises: IDs of all of the subsystems of the distributed base station and type information of the data models of all of the subsystems of the distributed base station.

4. The method of claim 3, wherein the step of implementing data interaction with the subsystems through the network element agent module according to the data model of the network element agent module comprises steps of:
acquiring a data model set, wherein when distributing data, data to be distributed is generated according to the data model set, and the data model set comprises the data models of all of the subsystems of the distributed base station;
in response to the data to be distributed containing a subsystem ID, sending the data to be distributed to the network element agent module, and performing operation of distributing data by the network element agent module according to the data model of the network element agent module; and
in response to the data to be distributed not containing a subsystem ID, sending the data to be distributed to the network element agent module, such that the network element agent module distributes the data to be distributed to all subsystems whose subsystem IDs are contained in the data model of the network element agent module;
wherein the step of performing operation of distributing data by the network element agent module according to the data model of the network element agent module comprises steps of: parsing, by the network element agent module, the data to be distributed according to the data model of the network element agent module to obtain at least one piece of parsed data; and distributing each piece of parsed data to a corresponding subsystem according to the subsystem ID contained in each piece of parsed data.

5. The method of claim 3, wherein the step of implementing data interaction with the subsystems through the network element agent module according to the data model of the network element agent module comprises a step of:
receiving pass-through data of the network element agent module, wherein the pass-through data comprises data reported by at least one subsystem of the distributed base station.

6. The method of claim 2, wherein a structure of the data model of each subsystem is a tree structure, and the data model of each subsystem comprises at least: a root node and an attribute child node connected to the root node,
wherein the root node comprises: identification information of the distributed base station, and
the attribute child node comprises: a subsystem ID, type information of the data model of the subsystem, and version information of the data model of the subsystem.

7. The method of claim 2, wherein a structure of the data model of the network element agent module is a tree structure, and the data model of the network element agent module comprises: a root node and a plurality of attribute child nodes connected to the root node, each attribute child node corresponding to one subsystem,
wherein the root node comprises: identification information of the distributed base station, and
the attribute child node comprises: a subsystem ID and type information of the data model of the subsystem.

8. A data interaction device (70), comprising a first creation module (701), a second creation module (702), and a control module (703), wherein,
the first creation module (701) is configured to create a data model for each subsystem in a distributed base station, wherein the data model of each subsystem is used for representing a data processing mode of the subsystem, and data models of all subsystems of the distributed base station include at least two data models with a specified relationship, the specified relationship being that type information of the data models is the same but version information of the data models is different;
the second creation module (702) is configured to create a data model of a network element agent module according to the data models of all of the subsystems of the distributed base station, wherein the data model of the network element agent module is used for representing a data interaction mode between the network element agent module and each subsystem of the distributed base station; and
the control module (703) is configured to implement data interaction with the subsystems through the network element agent module according to the data model of the network element agent module,
wherein the network element agent module is a device for implementing data interaction between the distributed base station and an external device.

9. The device of claim 8, wherein the data model (32) of each subsystem comprises: a subsystem identity ID, type information of the data model of the subsystem, and version information of the data model of the subsystem.

10. The device of claim 9, wherein the data model of the network element agent module comprises: IDs of all of the subsystems of the distributed base station and type information of the data models of all of the subsystems of the distributed base station.

11. The device of claim 10, wherein the control module is further configured to implement data interaction with the subsystems through the network element agent module according to the data model of the network element agent module by operations of:
acquiring a data model set, wherein when distributing data, data to be distributed is generated according to the data model set, and the data model set comprises the data models of all of the subsystems of the distributed base station;
in response to the data to be distributed containing a subsystem ID, sending the data to be distributed to the network element agent module, and performing operation of distributing data by the network element agent module according to the data model of the network element agent module; and
in response to the data to be distributed not containing a subsystem ID, sending the data to be distributed to the network element agent module, such that the network element agent module distributes the data to be distributed to all subsystems whose subsystem IDs are contained in the data model of the network element agent module;
wherein the step of performing operation of distributing data by the network element agent module according to the data model of the network element agent module comprises steps of: parsing, by the network element agent module, the data to be distributed according to the data model of the network element agent module to obtain at least one piece of parsed data; and distributing each piece of parsed data to a corresponding subsystem according to the subsystem ID contained in each piece of parsed data.

12. The device of claim 10, wherein the control module is further configured to implement data interaction with the subsystems through the network element agent module according to the data model of the network element agent module by an operation of:
receiving pass-through data of the network element agent module, wherein the pass-through data comprises data reported by at least one subsystem of the distributed base station.

13. A data interaction apparatus, comprising: a memory and a processor, wherein
the memory is configured to store a data interaction program; and
the processor is configured to execute the data interaction program stored in the memory to implement the steps of the method of any one of claims 1 to 7.

14. A computer-readable storage medium, storing a computer program therein, wherein the computer program is capable of being executed by a processor to implement the steps of the method of any one of claims 1 to 7.

## Patentansprüche

1. Dateninteraktionsverfahren, umfassend:
Erzeugen (21) eines Datenmodells für jedes Subsystem in einer verteilten Basisstation, wobei das Datenmodell jedes Subsystems zur Darstellung eines Datenverarbeitungsmodus des Subsystems verwendet wird und die Datenmodelle aller Subsysteme der verteilten Basisstation mindestens zwei Datenmodelle mit einer spezifizierten Beziehung enthalten, wobei die spezifizierte Beziehung darin besteht, dass die Typinformationen der Datenmodelle gleich sind, aber die Versionsinformationen der Datenmodelle unterschiedlich sind;
Erzeugen (22) eines Datenmodells eines Netzelement-Agentenmoduls gemäß den Datenmodellen aller Subsysteme der verteilten Basisstation, wobei das Datenmodell des Netzelement-Agentenmoduls zur Darstellung eines Dateninteraktionsmodus zwischen dem Netzelement-Agentenmodul und jedem Subsystem der verteilten Basisstation verwendet wird; und
Implementieren (23) einer Dateninteraktion mit den Subsystemen durch das Netzelement-Agentenmodul gemäß dem Datenmodell des Netzelement-Agentenmoduls,
wobei das Netzelement-Agentenmodul eine Vorrichtung zur Implementierung der Dateninteraktion zwischen der verteilten Basisstation und einer externen Vorrichtung ist.

2. Verfahren nach Anspruch 1, wobei das Datenmodell (32) jedes Subsystems Folgendes umfasst: eine Subsystem-Identitäts-ID, Typinformationen des Datenmodells des Subsystems und Versionsinformationen des Datenmodells des Subsystems.

3. Verfahren nach Anspruch 2, wobei das Datenmodell des Netzelement-Agentenmoduls umfasst: IDs aller Subsysteme der verteilten Basisstation und Typinformationen der Datenmodelle aller Subsysteme der verteilten Basisstation.

4. Verfahren nach Anspruch 3, wobei der Schritt des Implementierens der Dateninteraktion mit den Subsystemen durch das Netzelement-Agentenmodul gemäß dem Datenmodell des Netzelement-Agentenmoduls die folgenden Schritte umfasst::
Erfassen eines Datenmodellsatzes, wobei beim Verteilen von Daten die zu verteilenden Daten gemäß dem Datenmodellsatz erzeugt werden und der Datenmodellsatz die Datenmodelle aller Subsysteme der verteilten Basisstation umfasst;
als Reaktion darauf, dass die zu verteilenden Daten eine Subsystem-ID enthalten, Senden der zu verteilenden Daten an das Netzelement-Agentenmodul und Durchführen einer Operation zum Verteilen von Daten durch das Netzelement-Agentenmodul gemäß dem Datenmodell des Netzelement-Agentenmoduls; und
als Reaktion darauf, dass die zu verteilenden Daten keine Subsystem-ID enthalten, Senden der zu verteilenden Daten an das Netzelement-Agentenmodul, so dass das Netzelement-Agentenmodul die zu verteilenden Daten an alle Subsysteme verteilt, deren Subsystem-IDs in dem Datenmodell des Netzelement-Agentenmoduls enthalten sind;
wobei der Schritt des Durchführens der Operation des Verteilens von Daten durch das Netzelement-Agentenmodul gemäß dem Datenmodell des Netzelement-Agentenmoduls die folgenden Schritte umfasst: Parsen der zu verteilenden Daten durch das Netzelement-Agentenmodul gemäß dem Datenmodell des Netzelement-Agentenmoduls, um mindestens ein Stück geparster Daten zu erhalten; und Verteilen jedes Stücks geparster Daten an ein entsprechendes Subsystem gemäß der in jedem Stück geparster Daten enthaltenen Subsystem-ID.

5. Verfahren nach Anspruch 3, wobei der Schritt des Implementierens einer Dateninteraktion mit den Subsystemen durch das Netzelement-Agentenmodul gemäß dem Datenmodell des Netzelement-Agentenmoduls einen Schritt umfasst, bei dem:
Empfangen von Durchgangsdaten des Netzelement-Agentenmoduls, wobei die Durchgangsdaten Daten umfassen, die von mindestens einem Subsystem der verteilten Basisstation gemeldet werden.

6. Verfahren nach Anspruch 2, wobei eine Struktur des Datenmodells jedes Subsystems eine Baumstruktur ist und das Datenmodell jedes Subsystems mindestens umfasst: einen Wurzelknoten und einen mit dem Wurzelknoten verbundenen Attribut-Unterknoten,
wobei der Wurzelknoten umfasst: Identifikationsinformationen der verteilten Basisstation, und
der Attribut-Unterknoten umfasst: eine Subsystem-ID, Typinformationen des Datenmodells des Subsystems und Versionsinformationen des Datenmodells des Subsystems.

7. Verfahren nach Anspruch 2, wobei eine Struktur des Datenmodells des Netzelement-Agentenmoduls eine Baumstruktur ist und das Datenmodell des Netzelement-Agentenmoduls umfasst: einen Wurzelknoten und eine Vielzahl von Attribut-Unterknoten, die mit dem Wurzelknoten verbunden sind, wobei jeder Attribut-Unterknoten einem Subsystem entspricht,
wobei der Wurzelknoten umfasst: Identifikationsinformationen der verteilten Basisstation, und
der Attribut-Unterknoten umfasst: eine Subsystem-ID und Typinformationen des Datenmodells des Subsystems.

8. Dateninteraktionsvorrichtung (70), umfassend
ein erstes Erzeugungsmodul (701), ein zweites Erzeugungsmodul (702) und ein Steuermodul (703), wobei,
das erste Erzeugungsmodul (701) so konfiguriert ist, dass es ein Datenmodell für jedes Subsystem in einer verteilten Basisstation erzeugt, wobei das Datenmodell jedes Subsystems dazu verwendet wird, einen Datenverarbeitungsmodus des Subsystems darzustellen, und die Datenmodelle aller Subsysteme der verteilten Basisstation mindestens zwei Datenmodelle mit einer spezifizierten Beziehung enthalten, wobei die spezifizierte Beziehung darin besteht, dass die Typinformationen der Datenmodelle gleich sind, aber die Versionsinformationen der Datenmodelle unterschiedlich sind;
das zweite Erzeugungsmodul (702) so konfiguriert ist, dass es ein Datenmodell eines Netzelement-Agentenmoduls gemäß den Datenmodellen aller Subsysteme der verteilten Basisstation erzeugt, wobei das Datenmodell des Netzelement-Agentenmoduls zur Darstellung eines Dateninteraktionsmodus zwischen dem Netzelement-Agentenmodul und jedem Subsystem der verteilten Basisstation verwendet wird; und
das Steuermodul (703) so konfiguriert ist, dass es eine Dateninteraktion mit den Subsystemen durch das Netzelement-Agentenmodul gemäß dem Datenmodell des Netzelement-Agentenmoduls implementiert,
wobei das Netzelement-Agentenmodul eine Vorrichtung zur Implementierung der Dateninteraktion zwischen der verteilten Basisstation und einem externen Gerät ist.

9. Vorrichtung nach Anspruch 8, wobei das Datenmodell (32) jedes Subsystems umfasst: eine Subsystem-Identitäts-ID, Typinformationen des Datenmodells des Subsystems und Versionsinformationen des Datenmodells des Subsystems.

10. Vorrichtung nach Anspruch 9, wobei das Datenmodell des Netzelement-Agentenmoduls Folgendes umfasst: IDs aller Subsysteme der verteilten Basisstation und Typinformationen der Datenmodelle aller Subsysteme der verteilten Basisstation.

11. Vorrichtung nach Anspruch 10, wobei das Steuermodul ferner so konfiguriert ist, dass es eine Dateninteraktion mit den Subsystemen über das Netzelement-Agentenmodul gemäß dem Datenmodell des Netzelement-Agentenmoduls durch die folgenden Operationen implementiert:
Erfassen eines Datenmodellsatzes, wobei beim Verteilen von Daten die zu verteilenden Daten gemäß dem Datenmodellsatz erzeugt werden und der Datenmodellsatz die Datenmodelle aller Subsysteme der verteilten Basisstation umfasst;
als Reaktion darauf, dass die zu verteilenden Daten eine Subsystem-ID enthalten, Senden der zu verteilenden Daten an das Netzelement-Agentenmodul und Durchführen einer Operation zum Verteilen von Daten durch das Netzelement-Agentenmodul gemäß dem Datenmodell des Netzelement-Agentenmoduls; und
als Reaktion darauf, dass die zu verteilenden Daten keine Subsystem-ID enthalten, Senden der zu verteilenden Daten an das Netzelement-Agentenmodul, so dass das Netzelement-Agentenmodul die zu verteilenden Daten an alle Subsysteme verteilt, deren Subsystem-IDs in dem Datenmodell des Netzelement-Agentenmoduls enthalten sind;
wobei der Schritt des Durchführens der Operation des Verteilens von Daten durch das Netzelement-Agentenmodul gemäß dem Datenmodell des Netzelement-Agentenmoduls die folgenden Schritte umfasst: Parsen der zu verteilenden Daten durch das Netzelement-Agentenmodul gemäß dem Datenmodell des Netzelement-Agentenmoduls, um mindestens ein Stück geparster Daten zu erhalten; und Verteilen jedes Stücks geparster Daten an ein entsprechendes Subsystem gemäß der in jedem Stück geparster Daten enthaltenen Subsystem-ID.

12. Vorrichtung nach Anspruch 10, wobei das Steuermodul ferner so konfiguriert ist, dass es eine Dateninteraktion mit den Teilsystemen über das Netzelement-Agentenmodul gemäß dem Datenmodell des Netzelement-Agentenmoduls durch einen Vorgang implementiert, bei dem:
Empfangen von Durchgangsdaten des Netzelement-Agentenmoduls, wobei die Durchgangsdaten Daten umfassen, die von mindestens einem Subsystem der verteilten Basisstation gemeldet werden.

13. Eine Dateninteraktionsvorrichtung, die Folgendes umfasst: einen Speicher und einen Prozessor, wobei
der Speicher konfiguriert ist, um ein Dateninteraktionsprogramm zu speichern; und
der Prozessor so konfiguriert ist, dass er das in dem Speicher gespeicherte Dateninteraktionsprogramm ausführt, um die Schritte des Verfahrens nach einem der Ansprüche 1 bis 7 zu implementieren.

14. Computerlesbares Speichermedium, in dem ein Computerprogramm gespeichert ist, wobei das Computerprogramm von einem Prozessor ausgeführt werden kann, um die Schritte des Verfahrens nach einem der Ansprüche 1 bis 7 zu implementieren.

## Revendications

1. Procédé d'interaction de données, comprenant :
créer (21) un modèle de données pour chaque sous-système dans une station de base distribuée, dans lequel le modèle de données de chaque sous-système est utilisé pour représenter un mode de traitement de données du sous-système, et les modèles de données de tous les sous-systèmes de la station de base distribuée comprennent au moins deux modèles de données avec une relation spécifiée, la relation spécifiée étant que les informations de type des modèles de données sont les mêmes mais que les informations de version des modèles de données sont différentes ;
créer (22) un modèle de données d'un module d'agent d'élément de réseau selon les modèles de données de tous les sous-systèmes de la station de base distribuée, dans lequel le modèle de données du module d'agent d'élément de réseau est utilisé pour représenter un mode d'interaction de données entre le module d'agent d'élément de réseau et chaque sous-système de la station de base distribuée ; et
mettre en oeuvre (23) l'interaction de données avec les sous-systèmes par l'intermédiaire du module d'agent d'élément de réseau selon le modèle de données du module d'agent d'élément de réseau,
dans lequel le module agent d'élément de réseau est un dispositif pour mettre en oeuvre une interaction de données entre la station de base distribuée et un dispositif externe.

2. Procédé de la revendication 1, dans lequel le modèle de données (32) de chaque sous-système comprend : une identité ID de sous-système, des informations de type du modèle de données du sous-système, et des informations de version du modèle de données du sous-système.

3. Procédé de la revendication 2, dans lequel le modèle de données du module d'agent d'élément de réseau comprend : des identités ID de tous les sous-systèmes de la station de base distribuée et des informations de type des modèles de données de tous les sous-systèmes de la station de base distribuée.

4. Procédé de la revendication 3, dans lequel l'étape de mettre en oeuvre d'une interaction de données avec les sous-systèmes par l'intermédiaire du module d'agent d'élément de réseau selon le modèle de données du module d'agent d'élément de réseau comprend les étapes consistant à :
acquérir un ensemble de modèles de données, dans lequel, lors de la distribution de données, les données à distribuer sont générées selon l'ensemble de modèles de données, et l'ensemble de modèles de données comprend les modèles de données de tous les sous-systèmes de la station de base distribuée ;
en réponse aux données à distribuer contenant un ID de sous-système, envoyer les données à distribuer au module d'agent d'élément de réseau, et effectuer une opération de distribution de données par le module d'agent d'élément de réseau selon le modèle de données du module d'agent d'élément de réseau ; et
en réponse aux données à distribuer ne contenant pas d'ID de sous-système, envoyer les données à distribuer au module d'agent d'élément de réseau, de sorte que le module d'agent d'élément de réseau distribue les données à distribuer à tous les sous-systèmes dont les ID de sous-système sont contenus dans le modèle de données du module d'agent d'élément de réseau ;
dans lequel l'étape d'exécution de l'opération de distribution de données par le module d'agent d'élément de réseau selon le modèle de données du module d'agent d'élément de réseau comprend les étapes consistant à : analyser, par le module d'agent d'élément de réseau, les données à distribuer selon le modèle de données du module d'agent d'élément de réseau pour obtenir au moins une pièce de données analysées ; et distribuer chaque pièce de données analysées à un sous-système correspondant selon l'ID de sous-système contenu dans chaque pièce de données analysées.

5. Procédé de la revendication 3, dans lequel l'étape de mettre en œuvre d'une interaction de données avec les sous-systèmes par l'intermédiaire du module d'agent d'élément de réseau selon le modèle de données du module d'agent d'élément de réseau comprend une étape de :
recevoir des données de passage du module agent d'élément de réseau, dans lequel les données de passage comprennent des données rapportées par au moins un sous-système de la station de base distribuée.

6. Procédé de la revendication 2, dans lequel une structure du modèle de données de chaque sous-système est une structure arborescente, et le modèle de données de chaque sous-système comprend au moins : un nœud racine et un nœud enfant d'attribut connecté au nœud racine,
dans lequel le nœud racine comprend : des informations d'identification de la station de base distribuée, et
le nœud enfant d'attribut comprend : une ID de sous-système, des informations de type du modèle de données du sous-système, et des informations de version du modèle de données du sous-système.

7. Procédé de la revendication 2, dans lequel une structure du modèle de données du module agent d'élément de réseau est une structure arborescente, et le modèle de données du module agent d'élément de réseau comprend : un nœud racine et une pluralité de nœuds enfants d'attribut connectés au nœud racine, chaque nœud enfant d'attribut correspondant à un sous-système,
dans lequel le nœud racine comprend : des informations d'identification de la station de base distribuée, et
le nœud enfant d'attribut comprend : une ID de sous-système et des informations de type du modèle de données du sous-système.

8. Dispositif d'interaction de données (70), comprenant
un premier module de création (701), un second module de création (702) et un module de commande (703), dans lequel,
le premier module de création (701) est configuré pour créer un modèle de données pour chaque sous-système dans une station de base distribuée, dans lequel le modèle de données de chaque sous-système est utilisé pour représenter un mode de traitement de données du sous-système, et les modèles de données de tous les sous-systèmes de la station de base distribuée comprennent au moins deux modèles de données avec une relation spécifiée, la relation spécifiée étant que les informations de type des modèles de données sont les mêmes mais les informations de version des modèles de données sont différentes ;
le second module de création (702) est configuré pour créer un modèle de données d'un module d'agent d'élément de réseau selon les modèles de données de tous les sous-systèmes de la station de base distribuée, dans lequel le modèle de données du module d'agent d'élément de réseau est utilisé pour représenter un mode d'interaction de données entre le module d'agent d'élément de réseau et chaque sous-système de la station de base distribuée ; et
le module de commande (703) est configuré pour mettre en œuvre une interaction de données avec les sous-systèmes par l'intermédiaire du module d'agent d'élément de réseau selon le modèle de données du module d'agent d'élément de réseau,
dans lequel le module agent d'élément de réseau est un dispositif pour mettre en œuvre une interaction de données entre la station de base distribuée et un dispositif externe.

9. Dispositif de la revendication 8, dans lequel le modèle de données (32) de chaque sous-système comprend : une identité ID de sous-système, des informations de type du modèle de données du sous-système, et des informations de version du modèle de données du sous-système.

10. Dispositif de la revendication 9, dans lequel le modèle de données du module agent d'élément de réseau comprend : des ID de tous les sous-systèmes de la station de base distribuée et des informations de type des modèles de données de tous les sous-systèmes de la station de base distribuée.

11. Dispositif de la revendication 10, dans lequel le module de commande est en outre configuré pour mettre en œuvre une interaction de données avec les sous-systèmes par l'intermédiaire du module d'agent d'élément de réseau selon le modèle de données du module d'agent d'élément de réseau par les opérations suivantes :
acquérir un ensemble de modèles de données, dans lequel, lors de la distribution de données, les données à distribuer sont générées selon l'ensemble de modèles de données, et l'ensemble de modèles de données comprend les modèles de données de tous les sous-systèmes de la station de base distribuée ;
en réponse aux données à distribuer contenant une ID de sous-système, envoyer les données à distribuer au module d'agent d'élément de réseau, et effectuer une opération de distribution de données par le module d'agent d'élément de réseau selon le modèle de données du module d'agent d'élément de réseau ; et
en réponse aux données à distribuer ne contenant pas d'ID de sous-système, envoyer les données à distribuer au module d'agent d'élément de réseau, de sorte que le module d'agent d'élément de réseau distribue les données à distribuer à tous les sous-systèmes dont les ID de sous-système sont contenus dans le modèle de données du module d'agent d'élément de réseau ;
dans lequel l'étape d'exécution de l'opération de distribution de données par le module d'agent d'élément de réseau selon le modèle de données du module d'agent d'élément de réseau comprend les étapes consistant à : analyser, par le module d'agent d'élément de réseau, les données à distribuer selon le modèle de données du module d'agent d'élément de réseau pour obtenir au moins une pièce de données analysées ; et distribuer chaque pièce de données analysées à un sous-système correspondant selon l'ID de sous-système contenu dans chaque pièce de données analysées.

12. Dispositif de la revendication 10, dans lequel le module de commande est en outre configuré pour mettre en œuvre une interaction de données avec les sous-systèmes par l'intermédiaire du module d'agent d'élément de réseau selon le modèle de données du module d'agent d'élément de réseau par une opération consistant à :
recevoir des données de passage du module agent d'élément de réseau, dans lequel les données de passage comprennent des données rapportées par au moins un sous-système de la station de base distribuée.

13. Appareil d'interaction de données, comprenant : une mémoire et un processeur, dans lequel
la mémoire est configurée pour stocker un programme d'interaction de données ; et
le processeur est configuré pour exécuter le programme d'interaction de données stocké dans la mémoire pour mettre en œuvre les étapes du procédé de l'une quelconque des revendications 1 à 7.

14. Support de stockage lisible par ordinateur, stockant un programme informatique, dans lequel le programme informatique est capable d'être exécuté par un processeur pour mettre en œuvre les étapes du procédé de l'une quelconque des revendications 1 à 7.
